Europäisches Patentamt

(19) European Patent Office (11) Veröffentlichungsnummer: **0 215 851**

Office européen des brevets **B1**

(12) **EUROPÄISCHE PATENTSCHRIFT**

(45) Veröffentlichungstag der Patentschrift: (51) Int. Cl.⁴: **B 65 G 39/12**
20.07.88

(21) Anmeldenummer: 86901731.9

(22) Anmeldetag: 27.02.86

(86) Internationale Anmeldenummer:
**PCT/AT 86/00017**

(87) Internationale Veröffentlichungsnummer:
**WO 86/05165 (12.09.86 Gazette 86/20)**

(54) **FÖRDEREINRICHTUNG.**

(30) Priorität: 01.03.85 AT 622/85

(43) Veröffentlichungstag der Anmeldung:
01.04.87 Patentblatt 87/14

(45) Bekanntmachung des Hinweises auf die Patenterteilung:
20.07.88 Patentblatt 88/29

(84) Benannte Vertragsstaaten:
**AT BE CH DE FR GB IT LI LU NL SE**

(56) Entgegenhaltungen:
**BE-A-530 655**
**DE-A-3 309 073**
**DE-C-834 366**
**SU-A-179 255**
**US-A-3 856 133**

(73) Patentinhaber: **Binder & Co. Aktiengesellschaft,
Grazer Strasse 19- 25, A-8200 Gleisdorf (AT)**

(72) Erfinder: **SCHOBER, Johann, Franz- Arnfelsergasse
16, A-8200 Gleisdorf (AT)**

(74) Vertreter: **Kliment, Peter, Dipl.- Ing. Mag.- jur.,
Singerstrasse 8, A-1010 Wien (AT)**

## Beschreibung

Die Erfindung bezieht sich auf eine Fördereinrichtung, insbesondere Förderband, mit einem in einer im wesentlichen in einer horizontal liegenden Ebene eine Krümmung aufweisenden Förderweg, bei welcher Einrichtung das sich durchgehend über den Förderweg erstreckende, das Fördergut aufnehmende Fördermittel, z. B. ein Förderband, in einem mindestens eine Rollenstation aufweisenden, entlang des Förderweges unverrückbar gehaltenen Gestell gehalten ist, welche Rollenstation mindestens eine, um eine quer zur Förderrichtung verlaufende Achse drehbare Rolle aufweist, und um eine in Förderrichtung bzw. um eine zu dieser parallel verlaufenden Achse verschwenkbar gehalten ist, wobei die im Bereich der Krümmung angeordneten Rollenstationen um die in Förderrichtung verlaufende Achse verschwenkbar sind, und deren Schwenkbahnen quer zur Förderrichtung in Richtung zum Mittelpunkt der Krümmung des Förderweges hin ansteigen.

Eine solche Fördereinrichtung wurde z. B. durch die DE-C-834 366 bekannt. Bei dieser bekannten Lösung ist für beide Trume des Förderbandes stets eine gemeinsame Rollenstation vorgesehen, die entlang einer geschlossenen, vom Förderband durchsetzten Kreisbahn einstellbar ist.

Bei dieser Lösung ergibt sich der Nachteil, daß die Einstellung der Rollenstationen grundsätzlich nur nach einem Mittelwert erfolgen kann, der sich aus der Belastung des oberen, das Transportgut tragenden Trumes und dem unbelasteten unteren Trum ergibt. Damit ist aber keinesfalls eine optimale Einstellung der Rollenstationen möglich und es kommt daher zu entsprechend hohen Belastungen des Förderbandes.

Weiters wurde durch die DE-C-622 057 eine Fördereinrichtung bekannt, bei der die einzelnen Rollenstationen, die trapezförmig angeordnete Rollen halten, an einer unterhalb der Förderbahn angeordneten, in Förderrichtung verlaufenden Achse abgestützt sind. Dadurch ergibt sich aber der Nachteil, daß bei einer Erhöhung des auf das Förderband einwirkenden Zuges auf die an der Innenseite des Bogens des Förderweges liegenden Rollen eine zum Mittelpunkt der Krümmung dieser Bahn hin wirkende Kraft einwirkt, wodurch es zu einem Abkippen dieser Rollen kommt, so daß die die Rollen haltende Gestelle verdrehsicher mit der Achse verbunden, oder auf eine andere Weise z. B. durch die Schwenkbewegung des Gestells begrenzende Anschläge gegen ein Abkippen gesichert werden müssen, um ein Abrutschen des Förderbandes zu verhindern, dadurch muß aber die auf diese Weise festgelegte Neigung der einzelnen Gestelle auf eine durchschnittliche Belastung der Förderbahn, und eine durchschnittliche Geschwindigkeit ausgelegt werden. Dies ist aber mit dem Nachteil verbunden, daß bei von dieser durchschnittlichen Belastung abweichenden Belastung die Querneigung oder auch "Sturz" genannt, den Gegebenheiten nur mehr sehr unvollkommen entspricht.

Ziel der Erfindung ist es diese Nachteile zu vermeiden und eine Fördereinrichtung der eingangs erwähnten Art vorzuschlagen, bei der eine von der Belastung der Förderbahnen abhängige Querneigung im Bereich der Bahnkrümmungen möglich ist.

Erfindungsgemäß wird dies dadurch erreicht, daß für das obere und das untere Trum des Förderbandes im Bereich der Krümmung desselben separate Rollenstationen vorgesehen sind, die frei, gemäß den auftretenden Kräften, um die in Förderrichtung verlaufende, gegebenenfalls imaginäre Achse unabhängig voneinander verschwenkbar sind, wobei diese Achse in an sich bekannter Weise oberhalb der Förderbahn angeordnet ist. Dadurch ist es möglich, die Querneigung der Förderbahnen weitgehend dem freien Spiel der auftretenden Kräfte zu überlassen, wodurch sich ein Anheben der bogeninneren Rollen dieser Rollenstationen entsprechend der auf die einzelnen Trume einwirkenden Kräfte ergibt, was ein Abrutschen des Förderbandes sicher verhindert. Außerdem ergibt sich durch die voneinander unabhängige Verschwenkbarkeit der Rollenstationen der beiden Trume ein optimaler Lauf des Förderbandes bei jeder Belastung, da sich die das untere Trum des Förderbandes tragenden Rollenstationen in ihrer Neigung in Abhängigkeit von der Geschwindigkeit einstellen können.

Dabei ist zweckmäßigerweise vorgesehen, daß jede Rollenstation mit Anschlägen zur Begrenzung des Schwenkwinkels versehen ist.

Weiters kann vorgesehen sein, daß die Rollenstationen in an sich bekannter Weise an einer über der Förderbahn angeordneten körperlichen Achse hängend angeordnet sind.

Nach einem weiteren Merkmal der Erfindung kann vorgesehen sein, daß die Rollenstationen bzw. deren Gestelle im wesentlichen kreisbogenförmig ausgebildet und auf zwei in Querrichtung der Förderbahn voneinander distanzierten Rollenböcken, deren die Rollen tragenden Achsen im wesentlichen parallel zur Förderbahn ausgerichtet sind, abgestützt sind.

Dies ermöglicht eine sehr übersichtliche Anordnung der Fördereinrichtung, wobei mit relativ gut zugänglichen Lagerstellen das Auslangen gefunden wird, wodurch die notwendigen Wartungsarbeiten ohne großen Aufwand durchgeführt werden können.

Bei dieser bevorzugten Ausführungsform der Erfindung kann vorgesehen sein, daß das Gestell einen durch ein Winkelprofil gebildeten Untergurt aufweist und die Rollen der Rollenböcke schräge Flächen aufweisen, wobei vorzugsweise mindestens eine den Untergurt übergreifende Kipp- und Abhebesicherung vorgesehen ist. Dadurch ergibt sich eine sehr einfache Konstruktion der einzelnen Rollenstationen.

Die Erfindung wird nun anhand der Zeichnung näher erläutert. Dabei zeigt:

Figur 1 eine Draufsicht auf eine erfindungsgemäße Fördereinrichtung,

Figur 2 einen Schnitt gemäß der Linie ĀĀ in Figur 1 einer ersten Ausführungsform,

Figur 3 einen Schnitt gemäß der Linie ĀĀ in Figur 1 eine zweite Ausführungsform,

Figur 4 einen Schnitt durch einen Rollenbock der Ausführungsform gemäß Figur 3 und

Figur 5 einen Schnitt durch die Kipp- und Abhebesicherung der Ausführungsform gemäß Figur 3.

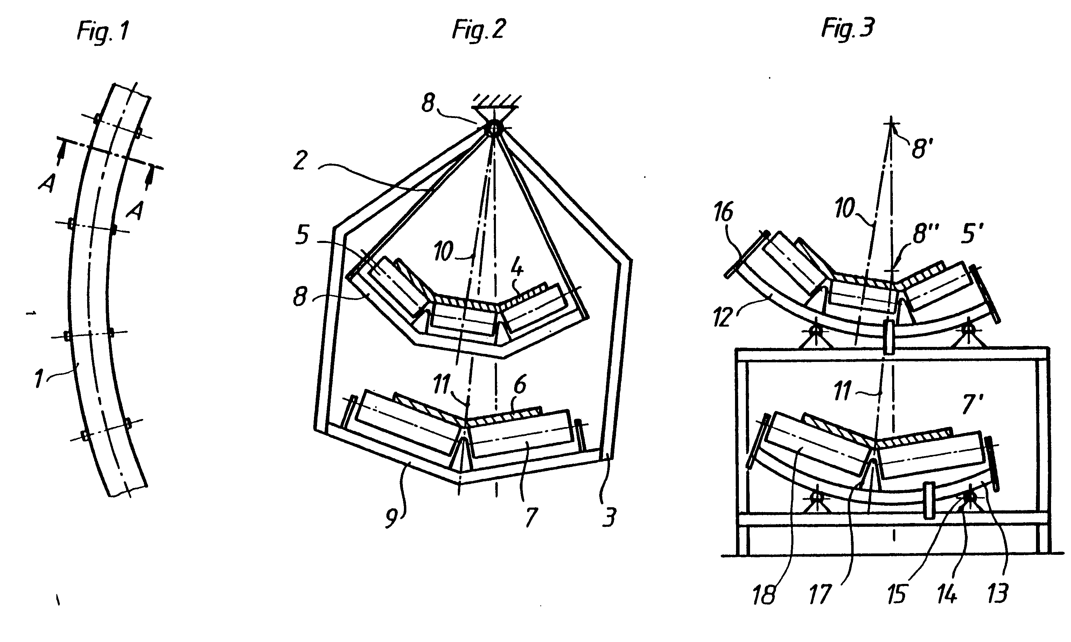

Wie Figur 1 zeigt, weist die Fördereinrichtung 1 eine im wesentlichen in einer horizontalen Ebene gelegenen Krümmung auf.

Bei der in Figur 2 dargestellten Ausführungsform sind die Gestelle 2 und 3 der das obere Trum 4 des Förderbandes tragenden Rollenstation 5 und der das untere Trum 6 tragenden Rollenstation 7 an einer parallel zum Förderweg verlaufenden Achse 8 schwenkbar aufgehängt. Dadurch können sich die Gestelle 5 und 7 entsprechend den aufgrund der Beladung des Förderbandes und dessen Geschwindigkeit auf diese einwirkende Fliehkraft und der Schwerkraft derart einstellen, daß die Resultierende dieser Kräfte senkrecht durch die Mitte der Sehne des Untergurts 8 bzw. 9 der Gestelle 5 und 7 verläuft, wie durch die strichliert dargestellten Achsen 10, 11 angedeutet ist.

Bei der Ausführungsform gemäß Figur 3 sind die Untergurte 12, 13 der Rollenstationen 5', 7' auf Rollenböcken 14 bzw. deren Rollen 15 abgestützt, wobei diese Untergurte 12, 13 kreisbogenförmig ausgebildet sind und die Achsen der Rollen 15 im wesentlichen parallel zur Förderbahn verlaufen.

An den Enden der Untergurte 12, 13 sind Seitenwangen 16 befestigt, die über die Unterseite der Untergurte 12, 13 hinaus verlängert sind und daher gleichzeitig als Anschläge zur Begrenzung des möglichen Schwenkwinkels dienen. In diesen Seitenwangen 16, wie auch in den an den Untergurten 12, 13 befestigten Lagerböcken 17 sind die Tragrollen 18 der Rollenstation 5' bzw. 7' drehbar gehalten, auf denen das Förderband aufliegt.

Auch bei dieser Ausführungsform können sich die Rollenstationen 5', 7' entsprechend den auf sie einwirkenden Kräfte frei einstellen, wenn man von der durch die Anschläge bedingten Begrenzung absieht. Dabei erfolgt die Verschwenkung um die imaginäre Achse 8' bzw. 8'', die durch den Mittelpunkt des durch die Untergurte 12, 13 bestimmten Kreisbogens bestimmt ist.

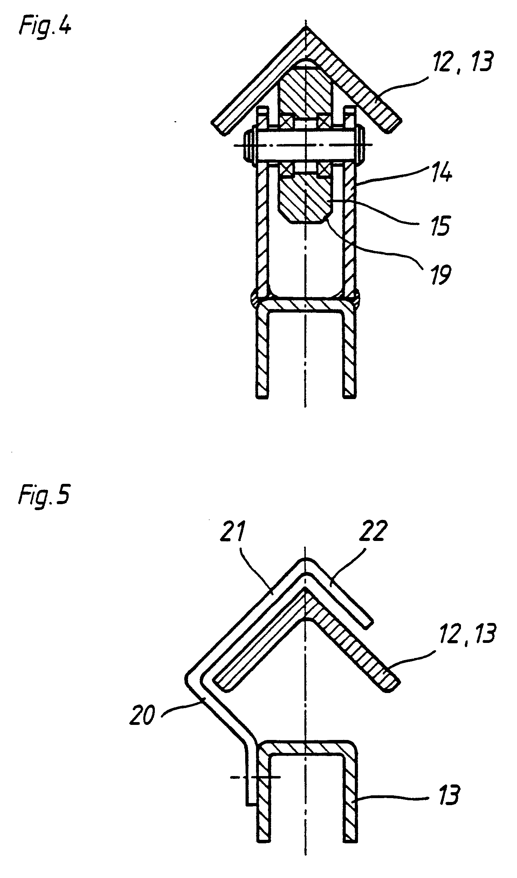

Wie aus Figur 4 ersichtlich, sind die Untergurte 12, 13 durch ein Winkelprofil gebildet, das auf den mit schrägen Stützflächen 19 versehenen Rollen 15 der Lagerböcke 14 aufliegt.

Um ein Umkippen der Rollenstationen 5', 7' zu verhindern, ist an einem festen Rahmen 13 eine Kipp- und Abhebesicherung 20 befestigt, die den Untergurt 12, 13 übergreift, wobei die Kipp- und Abhebesicherung 20 mit ihren Wangen 21, 22 im Querschnitt parallel zu den Schenkeln des Winkelprofils verläuft.

Grundsätzlich ist zu bemerken, daß bei der Ausführungsform gemäß Figur 3 die Gestelle der Rollenstationen auch so ausgebildet sein können, daß sie um eine gemeinsame Achse 8' schwenkbar sind. Allerdings müssen dabei der Radius des Untergurts 13 entsprechend größer als jener des Untergurtes 12 sein.

**Patentansprüche**

1. Fördereinrichtung, insbesondere Förderband, mit einem in einer im wesentlichen horizontal liegenden Ebene eine Krümmung aufweisenden Förderweg, bei welcher Einrichtung das sich durchgehend über den Förderweg erstreckende, das Fördergut aufnehmende Fördermittel, z. B. ein Förderband, in einem mindestens eine Rollenstation aufweisenden, entlang des Förderweges unverrückbar gehaltenen Gestell gehalten ist, welche Rollenstation mindestens eine, um eine quer zur Förderrichtung verlaufende Achse drehbare Rolle aufweist, und um eine in Förderrichtung bzw. um eine zu dieser parallel verlaufenden Achse verschwenkbar gehalten ist, wobei die im Bereich der Krümmung angeordneten Rollenstationen um die in Förderrichtung verlaufende Achse verschwenkbar sind und deren Schwenkbahnen quer zur Förderrichtung in Richtung zum Mittelpunkt der Krümmung des Förderweges hin ansteigen.
dadurch gekennzeichnet,
daß für das obere und das untere Trum (4, 6) des Förderbandes im Bereich der Krümmung desselben separate Rollenstationen (5, 7; 5', 7') vorgesehen sind, die frei, gemäß den auftretenden Kräften, um die in Förderrichtung verlaufende, gegebenenfalls imaginäre Achse (8) unabhängig voneinander verschwenkbar sind, wobei diese Achse in an sich bekannter Weise oberhalb der Förderbahn angeordnet ist.

2. Fördereinrichtung nach Anspruch 1,
dadurch gekennzeichnet,
daß die Rollenstation (5, 7, 5' ,7') in an sich bekannter Weise an einer über der Förderbahn angeordneten körperlichen Achse (8) hängend angeordnet ist.

3. Fördereinrichtung nach Anspruch 1,
dadurch gekennzeichnet,
daß die Rollenstation (5', 7') bzw. deren Gestelle im wesentlichen kreisbogenförmig ausgebildet und auf zwei in Querrichtung der Förderbahn voneinander distanzierten Rollenböcken, deren die Rollen tragenden Achsen im wesentlichen parallel zur Förderbahn ausgerichtet sind, abgestützt sind.

4. Fördereinrichtung nach Anspruch 3,
dadurch gekennzeichnet,
daß das Gestell einen durch ein Winkelprofil gebildeten Untergurt (12, 13) aufweist und die Rollen (15) der Rollenböcke (14) schräge Flächen (19) aufweisen.

5. Fördereinrichtung nach Anspruch 4,
dadurch gekennzeichnet,
daß mindestens eine den Untergurt (12, 13) übergreifende Kipp- und Abhebesicherung (20) vorgesehen ist.

6. Fördereinrichtung nach einem der Ansprüche 1 bis 5,
dadurch gekennzeichnet,
daß jede Rollenstation (5, 7, 5',7') mit Anschlägen (16) zur Begrenzung des Schwenkwinkels versehen ist.

**Claims**

1. Transport device, in particular a conveyor belt, having a transport path with a curve lying in a substantially horizontal plane, in which device the transport means, e.g. a conveyor belt, extending continuously over the transport path and receiving the materials to be transported, is held in a frame fixedly retained on the transport path and having at least one roller station, which roller station has at least one roller rotatable about an axis extending transversally to the transport direction and pivotable about an axis extending in the transport direction or about an axis parallel to this direction, wherein the roller stations arranged in the area of the curve can be pivoted about the axis extending in the transport direction and their pivoting paths rise tranversely to the transport direction in the direction of the centre point of the curve of the transport path,
characterised in that,
for the upper and the lower belt (4, 6) of the conveyor belt in the region of its curve, separate roller stations (5, 7; 5' ,7') are provided which can be pivoted freely and independently of each other, according to the forces occurring, about an optionally imaginary axis (8) extending in the transport direction, this axis being arranged in known manner above the transport path.

2. Transport device according to claim 1, characterised in that the roller station (5, 7, 5', 7') is arranged to be suspended in known manner on a solid axis (8) arranged above the transport path.

3. Transport device according to claim 1, characterised in that the respective frames of the roller stations (5' 7') are of substantially circular construction and are supported on two roller blocks spaced from each other in the transverse direction of the transport path, the axes of the rollers of which are aligned substantially parallel to the transport path.

4. Transport device according to claim 3, characterised in that the frame has an under girth (12, 13) formed by an angled profile, and the rollers (15) of the roller blocks (14) have inclined surfaces (19).

5. Transport device according to claim 4, characterised in that there is provided at least one anti-tilt and anti-lift stabiliser (20) engaging over the under girth (12, 13).

6. Transport device according to one of claims 1 to 5, charcterised in that each roller station (5, 7, 5', 7') is provided with stops (16) for limiting the pivoting angle.

**Revendications**

1. Dispositif transporteur, notamment une bande transporteuse, comprenant une voie de transport pourvue d'une courbure dans un plan situé sensiblement horizontalement, dispositif dans lequel le moyen de transport, par exemple une bande transporteuse, recevant la matière transportée et s'étendant de façon continue dans la voie de transport, est maintenu dans un châssis comportant au moins une station à rouleaux et monté de façon inamovible le long de la voie de transport, ladite station à rouleaux comportant au moins un rouleau pouvant tourner autour d'un axe orienté perpendiculairement à la direction de transport et étant maintenue de façon à pouvoir pivoter autour d'un axe orienté dans la direction de transport ou bien parallèlement à cette direction, les stations à rouleaux disposées dans la zone de la courbure pouvant pivoter autour d'axes orientés dans la direction de transport et leurs trajectoires de pivotement étant inclinées vers le haut perpendiculairement à la direction de transport en direction du centre de la courbure de la voie de transport, caractérisé en ce que, pour le brin supérieur et le brin inférieur (4, 6) de la bande transporteuse, il est prévu dans la zone de leurs courbures des stations à rouleaux séparées (5, 7; 5', 7'), qui peuvent pivoter librement et indépendamment l'une de l'autre, en correspondance aux forces qui s'exercent, autour d'un axe le cas échéant imaginaire (8), qui est orienté dans la direction de transport, ledit axe étant disposé d'une manière connue au-dessus de la voie de transport.

2. Dispositif transporteur selon la revendication 1, caractérisé en ce que la station à rouleaux (5, 7; 5', 7') est disposée d'une manière connue en étant suspendue à un arbre structural (8) placé au-dessus de la voie de transport.

3. Dispositif transporteur selon la revendication 1, caractérisé en ce que les stations à rouleaux (5', 7') ou leurs châssis sont réalisés dans l'essentiel avec une forme d'arc de cercle et sont soutenus par deux supports à rouleaux, espacés l'un de l'autre dans la direction transversale de la voie de transport et dont les arbres portant les rouleaux sont orientés sensiblement parallèlement à la voie de transport.

4. Dispositif transporteur selon la revendication 3, caractérisé en ce que le châssis comporte une membrure inférieure (12, 13) constituée par un profilé anguleux et les rouleaux (15) des supports à rouleaux (14) comportent des surfaces inclinées (19).

5. Dispositif transporteur selon la revendication 4, caractérisé en ce qu'il est prévu au moins une sécurité anti-basculement et anti-soulèvement (20) s'accrochant sur la membrure inférieure (12, 13).

6. Dispositif transporteur selon une des revendications 1 à 5, caractérisé en ce que chaque station à rouleaux (5, 7; 5', 7') est pourvue de butées (16) pour la limitation de l'angle de pivotement.

Fig. 1

Fig. 2

Fig. 3

0 215 851

Fig.4

12 , 13

14

15

19

Fig.5

21

22

12 , 13

20

13